# EUROPÄISCHE PATENTANMELDUNG

(11) **EP 2 425 921 A2**
(43) Veröffentlichungstag der Anmeldung: **07.03.2012**
(21) Anmeldenummer: 11401576.1
(22) Anmeldetag: 19.08.2011
(51) Int. Cl.: B23Q 1/48, B23C 3/18

(54) **Vorrichtung zur Bearbeitung von Werkstücken**

(30) Priorität: 23.08.2010 DE 202010008327 U
(71) Anmelder: StarragHeckert AG, 9404 Rohrschacherberg (CH)
(72) Erfinder: Geiger, Roland, 9404 Rorschacherberg (CH); Huber, Silvan, 9425 Thal (CH); Koller, Michael, 9326 Horn (CH)
(74) Vertreter: Rumrich, Gabriele

(57) **Zusammenfassung**

Die Erfindung betrifft eine Vorrichtung zur Bearbeitung von Werkstücken, insbesondere für eine Werkzeugmaschine (5) mit der Fräsbearbeitungen ausführbar sind, wobei die Vorrichtung zur Aufnahme eines Werkstückes (W) eine erste Spanneinheit (8) mit einem ersten Antrieb und eine zweite Spanneinheit (9) mit einem zweiten Antrieb aufweist, zwischen denen das Werkstück (W) einspannbar und um eine Rotationsachsedrehbar ist, und dass zumindest eine der Spanneinheiten (8, 9) entlang der Rotationsachse (A) längsbeweglich ist, wobei erfindungsgemäß während der Bearbeitung der erste und der zweite Antrieb das Werkstück (W) antreiben und die erste Spanneinheit (8) mit dem ersten Antrieb (erste Achse) und die zweite Spanneinheit (9) mit dem zweiten Antrieb (zweite Achse) ungleich ausgeführt sind, derart, dass der erste Antrieb als Hauptantrieb ausgebildet ist und eine bearbeitungsrelevante Hauptantriebsleistung aufbringt und dass der zweite Antrieb eine im Vergleich zum ersten Antrieb geringere Antriebsleistung aufweist. (Fig. 1)

## Beschreibung

Die Erfindung betrifft eine Vorrichtung zur Bearbeitung von Werkstücken nach dem Oberbegriff des ersten Patentanspruchs.

Ein modulares Spannbacken-System für die flexible Mehrfach- oder Mehrteilbearbeitung von Werkstücken ist aus der Druckschrift DE 20 2006 009 437 U1 bekannt. Gemäß der dort dargestellten und beschriebenen Figur 4 kann ein lang gestreckter Aufspannkörper, der Spannflächen zum Aufspannen der zu bearbeitenden Werkstücke besitzt, in einer waagerechten Anordnung beidseitig gelagert sein. An einer Seite sind dabei ein Schwenkantrieb und eine Adapterplatte als Antriebskupplung vorgesehen, so dass auf einer Seite ein Schwenkspannmodul den Aufspannkörper um dessen Längsachse schwenken kann. Dem Schwenkspannmodul gegenüberliegend ist lediglich ein Gegenlager zur Abstützung des Aufspannkörpers angeordnet.

Eine Werkstückspannvorrichtung für eine Werkzeugmaschine, mit der Fräsbearbeitungen ausführbar sind, ist aus DE 202 17 907 U 1 bekannt. Diese Maschine ist als 5-Achsmaschine ausgeführt und zur Aufnahme eines Werkstückes ist die Vorrichtung mit einer ersten Spannstelle und einer zweiten Spannstelle versehen, wobei zwischen den beiden sich in einer Spannposition befindenden Spannstellen ein Werkstück entlang einer durch beide Spannstellen verlaufenden (waagerechten) Rotationsachse A einspannbar und um die Rotationsachse drehbar ist, und zumindest eine der Spannstellen durch ein Antriebsmittel längsbeweglich ist. Eine der Spannstellen ist dabei rotatorisch antreibbar und weist ein Mehrbackenfutter auf und die andere Spannstelle ist in Form einer Zentrierspitze ausgebildet. Die Werkstückspannvorrichtung der Werkzeugmaschine ist als Rundstation ausgeführt, die auf einem Träger angeordnet und um eine angetriebene (senkrechte) B-Achse drehbar ist. Damit ist es möglich, in die freie Stirnseite des Werkstückes eine Zentrierbohrung einzubringen. Dazu wird das Werkstück in das Mehrbackenfutter eingespannt und die Rundstation um die Achse B so gedreht, dass die durch das Werkstück verlaufende Rotationsachse A parallel zur Rotationsachse der Werkzeugspindel 2 ausgerichtet ist. Die freie Stirnseite des Werkstücks ist nun für das Werkzeug zugänglich und kann mit einer Zentrierbohrung versehen werden. Der wesentliche Nachteil dieser Lösung besteht darin, dass durch den Antrieb nur einer Werkstückspannstelle, bei insbesondere langen Bauteilen, auf diese Torsionskräfte wirken, wodurch die Bauteile unerwünscht bei der Bearbeitung deformiert werden, was insbesondere bei der Bearbeitung von z. B. Turbinenschaufeln nachteilig ist. Daher wurden bereits Lösungen entwickelt, bei welchen beide Spannstellen des Werkstücks angetrieben werden.

Aus DE 10 2004 036 371 C5 ist beispielsweise eine Vorrichtung für die Mehrseitenbearbeitung von Werkstücken bekannt, die in einer, eine waagrechte und/oder senkrechte Arbeitsspindel aufweisenden Werkzeugmaschine, insbesondere einem Fräsbearbeitungszentrum, eingesetzt wird. Dabei ist ein sich in Vertikallage befindlicher, als Drehtisch ausgebildeter, Werkstücktisch für die Aufnahme eines, um dessen horizontale Drehachse drehbaren Werkstücks sowie ein zweiter Drehtisch mit einer horizontalen Drehachse, vorgesehen, der dem ersten Drehtisch spiegelbildlich, miteinander zugewandten Werkstückaufnahmeflächen, gegenüberliegt. Das Werkstück ist zwischen den Drehtischen einspannbar und mit diesen um eine gemeinsame horizontale Drehachse drehbar. Die Drehtische befinden sich auf einer gemeinsamen, in den und aus dem Arbeitsraum der Werkzeugmaschine hinein und heraus bewegbaren Trägerplatte, auf welcher wenigstens einer der Drehtische oder dessen Werkstückaufnahmefläche in Richtung des beziehungsweise der anderen verschiebbar angeordnet ist, wobei jeweils an einem Drehtisch oder an der Werkstückaufnahmefläche werkstückspezifisch ausgebildete Spannscheiben anbringbar sind. Durch die spiegelbildliche Ausbildung der Drehtische und somit auch die baugleiche Konfiguration deren Antriebe sind erhöhte fertigungstechnische Kosten zu verzeichnen.

In der Druckschrift WO 2006/122440 A1 wird eine Werkzeugmaschine zur Fräsbearbeitung von Werkstücken mit zumindest zwei linearen Bewegungsachsen beschrieben, wobei das Werkstück zwischen zwei rotatorisch antreibbaren Spannstellen in Spannzangen einspannbar ist und wobei die Spannstellen aufeinander zu- und höhenbewegbar sind. Dabei ist nachteilig, dass das Werkstück nur um eine Rotationsachse drehbar ist, da insbesondere für die Bearbeitung von Turbinenschaufeln eine höhere Flexibilität erforderlich ist.

Da in beiden vorgenannten Lösungen keine Aussage über die rotatorischen Antriebe der Werkstücke getroffen wird, ist naheliegend, dass in beiden sich gegenüberliegenden Spannstellen (Spannscheiben oder Spannzangen) die gleichen Antriebe vorhanden sind, was auch aus den Zeichnungen hervorgeht. Bei derartiger Achskonfiguration mit beiden Rotationsachsen im Werkstück besteht das Problem in der Sicht für den Bediener auf Werkstück und Fräsprozess, die normalerweise von der Seite erfolgt (achsparallel zum Werkstück) und welche durch eine zusätzliche Achse stark eingeschränkt ist.

Die Druckschrift DE 31 27 130 A1 offenbart ein Verfahren zum Werkstückwechseln bei spanenden Hochgeschwindigkeitsbearbeitungsmaschinen, bei welchem unterschiedliche Antriebe in Form eines Hauptantriebes und einer angetriebenen Reitstockspitze verwendet werden. Der Werkstückwechsel wird bei weiterlaufender Hauptspindel fliegend durchgeführt, in dem das von der Hauptspindel drehmomentenmäßig entkoppelte Werkstück durch die mit ihm drehmomentschlüssig gekuppelte Reitstockspindel von Null auf eine mit der Drehzahl der Hauptspindel zumindest annähernd übereinstimmende Drehzahl beschleunigt wird und nach Erreichen dieser Drehzahl drehmomentschlüssig mit der Hauptspindel gekoppelt wird. Die Reitstockspindel ist zu diesem Zweck mit einem zweiten Antriebsmotor verbunden, der eine im Vergleich zum Hauptantrieb geringe Leistung aufweist und in seiner Drehzahl von Null auf seine Höchstdrehzahl verstellt werden kann. Bei dieser Lösung wird eine Torsion des Werkstücks während der Bearbeitung nicht verhindert, da der Antriebsmotor nach dem Erreichen der Drehzahl der Hauptspindel drehmomentmäßig vom Werkstück getrennt und stillgelegt wird.

Aufgabe der Erfindung ist es, eine Vorrichtung für die Fräsbearbeitung zu entwickeln, die einen einfachen konstruktiven Aufbau aufweist und eine zuverlässige Bearbeitung von insbesondere komplexen Werkstücken mit Freiformflächen (wie z.B. Turbinenschaufeln) unter weitestgehender Vermeidung von Torsionskräften/- spannungen gewährleistet.

Diese Aufgabe wird mit den kennzeichnenden Merkmalen des ersten Patentanspruchs gelöst. Vorteilhafte Ausgestaltungen ergeben sich aus den Unteransprüchen.

Die Vorrichtung zur Bearbeitung von Werkstücken findet insbesondere für eine Werkzeugmaschine mit der Fräsbearbeitungen ausführbar sind Anwendung, wobei die Vorrichtung eine erste Spanneinheit mit einem ersten Antrieb (insgesamt eine erste Dreh-Spann-Einheit) und eine zweite Spannstelle mit einem zweiten Antrieb (insgesamt eine zweite Dreh-Spann-Einheit) aufweist, zwischen denen das Werkstück einspannbar und um eine Rotationsachse drehbar ist, wobei zumindest eine der Spannstellen entlang der Rotationsachse längsbeweglich ist, und erfindungsgemäß während der Bearbeitung der erste und der zweite Antrieb das Werkstück antreiben und die erste Spanneinheit mit dem ersten Antrieb (erste Achse) und die zweite Spanneinheit mit dem zweiten Antrieb (zweite Achse) ungleich ausgeführt sind, derart, dass der erste Antrieb als Hauptantrieb ausgebildet ist und eine bearbeitungsrelevante Hauptantriebsleistung aufbringt und dass der zweite Antrieb eine im Vergleich zum ersten Antrieb geringere Antriebsleistung aufweist.
Dadurch ist es möglich, insbesondere die in Richtung zum Bediener angeordnete zweite Achse, die der ersten Achse (Hauptantriebsachse) synchron derart folgt, dass keine Torsionsspannungen im Werkstück entstehen, kleiner auszuführen, wodurch der Bediener eine bessere Sicht auf den Bearbeitungsvorgang hat und die Vorrichtung konstruktiv einfacher und kostengünstiger realisiert werden kann.

Dabei bringt der Hauptantrieb der ersten Achse, die als Leitachse ausgebildet ist, die dominanten/bearbeitungsrelevanten Beschleunigungsmomente auf und der zweite Antrieb der zweiten Achse folgt dem ersten Antrieb synchron so, dass keine Torsion und vorteilhafter Weise auch keine Reibung am Werkstück entsteht.

Der Hauptantrieb der ersten Achse (der ersten Spanneinheit) kann beispielsweise als ein Direktantrieb/ Torquemotor ausgebildet sein und in der zweiten Achse (der zweiten Spanneinheit) kann beispielsweise ein leistungsschwächerer Servomotor mit Getriebeübersetzung Anwendung finden.
Beide Antriebsmotoren sind vorzugsweise mittels einer Steuerung gekoppelt, die die Synchronität der Drehzahlen der beiden Antriebe gewährleistet.

Die an der Vorrichtung vorhandene erste Spanneinheit für das Werkstück ist bevorzugt in Form einer hydraulischen oder pneumatischen Spanneinheit für eine Palette ausgebildet, so dass gewährleistet ist, dass ein auf einer Palette angeordnetes Werkstück über die Palette von der Vorrichtung aufnehmbar/spannbar ist. Diese erste (Paletten-) Spanneinheit wird bevorzugt auf der Seite des ersten Antriebes und somit der ersten Achse (Leitachse), welche die dominanten/bearbeitungsrelevanten Beschleunigungsmomente und die Hauptantriebsleistung aufbringt, vorgesehen.

Die gegenüberliegend angeordnete zweite Spanneinheit kann beispielsweise ein hydraulisch oder pneumatisch betätigtes Backenfutter aufweisen, welches durch den zweiten Antrieb rotatorisch angetrieben wird. Nachdem das zu bearbeitende Werkstück über die Palette in der ersten Spanneinheit aufgenommen wurde, wird die zweite Spanneinheit axial in Richtung zum Werkstück bewegt und spannt das Werkstück an seinem der Palette gegenüberliegenden Ende. Da dieses Ende wesentlich kleinere Abmessungen aufweist, als die Palette, über welche das Werkstück in der ersten Spannstelle gespannt wird, kann dafür ein Backenfutter gewählt werden, welches wesentlich kleiner baut als die erste (Paletten-) Spanneinheit. Das Backenfutter wird bevorzugt auf der Seite des zweiten Antriebes und somit der zweiten Achse eingesetzt, die in Richtung der Bedieneinheit angeordnet ist, wodurch der Bearbeitungsvorgang für den Bediener besser einsehbar ist.

Durch die Verwendung einer ersten Spanneinheit, die zur Aufnahme einer mit dem Werkstückrohling bestückten Palette geeignet ist, kann der Werkstückrohling außerhalb der Vorrichtung auf die Palette gespannt, über eine Wechselvorrichtung in den Arbeitsraum eingebracht und an der ersten (Paletten-) Spanneinheit gespannt werden.

Mit dieser einfachen konstruktiven Maßnahme der Verwendung unterschiedlicher Werkstückspannungen (deren Antriebsachsen fluchten) für ein Werkstück in Verbindung mit unterschiedlichen Antrieben wird der konstruktive Aufbau der Vorrichtung erheblich vereinfacht, Gewicht eingespart und der Bedienkomfort erhöht. Beide Spannstellen sind um eine senkrecht zur ersten Drehachse angeordnete zweite Drehachse drehbar, wodurch die Flexibilität der Vorrichtung weiter verbessert wird.

Die Erfindung wird nachfolgend anhand eines Ausführungsbeispiels und zugehöriger Zeichnungen näher erläutert. Es zeigen:
- Figur 1: die Prinzipdarstellung einer Werkzeugmaschine mit 5 Achsen und Werkstückträger in dreidimensionaler Darstellung und
- Figur 2: den Werkstückträger in der Vorderansicht mit angedeutetem Werkstück.

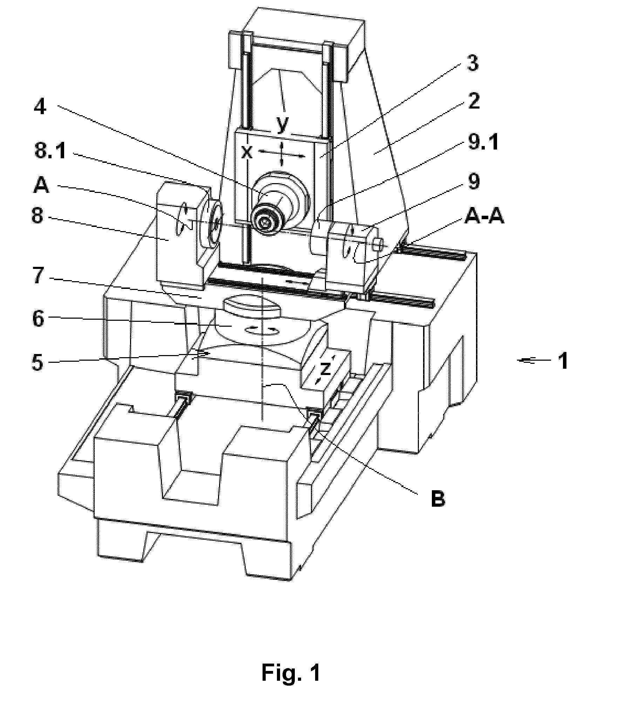

In Figur 1 wird die Prinzipdarstellung einer Werkzeugmaschine mit Werkstückträger ohne Werkstück dargestellt, wobei die Werkzeugmaschine 5 Achsen aufweist.

Auf dem Maschinengestell 1 ist ein Werkzeugträger 2 in X-Richtung (hier horizontal) verfahrbar angeordnet, an dem ein Schlitten 3 angeordnet ist, mit welchem eine Werkzeugspindel 4 in Y-Richtung (hier vertikal) verfahrbar ist, wobei die Werkzeugspindel 4 zur Aufnahme eines nicht dargestellten Bearbeitungswerkzeuges (Fräser oder Bohrer) dient. Die Werkzeugspindel 2 und damit auch das eingesetzte Werkzeug 2 ist über einen nicht dargestellten Antrieb rotatorisch antreibbar.

Auf dem Maschinengestell 1 ist ein Werkstückträger 5 angeordnet, der in Z-Richtung verfahrbar (hier horizontal) ist und einen um eine B-Achse (hier senkrecht) schwenkbaren Drehtisch 6 aufweist. Der Drehtisch 6 trägt einen Träger 7, auf welchem eine erste Spanneinheit 8 mit einem ersten Antrieb (nicht dargestellt) in Form eines Hauptantriebes mit einer ersten Achse A und eine zweite Spanneinheit 9 mit einem zweiten Antrieb (nicht dargestellt) mit einer zweiten Achse AA angeordnet sind. Beide Achsen A und AA sind koaxial zueinander ausgerichtet. Zwischen der ersten Spanneinheit 8 und der zweiten Spanneinheit 9 wird das hier nicht dargestellte Werkstück so eingespannt, dass es mit seiner Längsachse im Wesentlichen mit den Achsen A und AA fluchtet. Zumindest eine Spanneinheit, hier die erste Spanneinheit 9, ist in X-Richtung und somit in Richtung zur ersten Achse A auf dem Träger 7 verfahrbar angeordnet.

Die erste Spanneinheit 8 weist auf der Seite des Hauptantriebes des Werkzeuges W eine hydraulische Spanneinheit 8.1 für eine Palette auf. Die erste Achse A dient als Leitachse für den Hauptantrieb des Werkzeuges, der bevorzugt als Torquemotorausgebildet ist. Die zweite Spanneinheit 9 auf der Seite des zweiten Antriebes des Werkstücks und somit der zweiten Achse AA ist mit einem Backenfutter 9.1 ausgestattet.

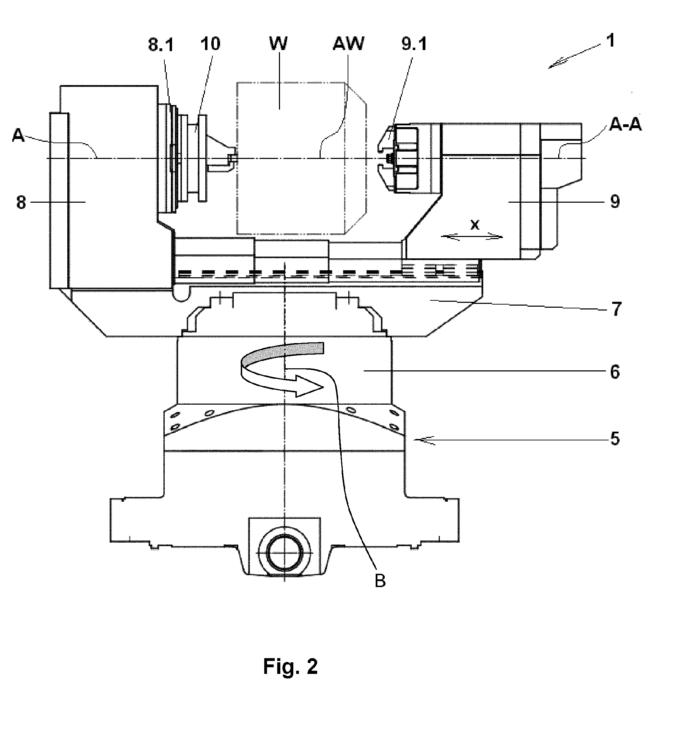

Die auf dem Werkstückträger 5 mittels eines Drehtisches 6 um die Achse B drehbare Vorrichtung in der Vorderansicht mit einem darin aufgenommenen gestrichelt dargestellten Werkstück W, dessen maximale Störkontur hier angedeutet ist, wird in Figur 2 gezeigt. Auf dem Drehtisch 6 sitzt der Träger 7 und zwischen den darauf befindlichen Spanneinheiten 8 und 9 wird das Werkstück W aufgenommen, so dass es mit seiner Längsachse AW im Wesentlichen koaxial zu der ersten Achse A (Leitachse) der ersten Spanneinheit 8 und der zweiten Achse AA der zweiten Spanneinheit 9 angeordnet ist.
Die zweite Spanneinheit 9 ist auf dem Träger 7 in X-Richtung verfahrbar gelagert. Das Werkstück W wurde vor dem Einlegen in die Vorrichtung auf eine Palette 10 gespannt und die Palette 10 wird in der hydraulischen ersten Spanneinheit 8.1 für eine Palette auf der Seite des Hauptantriebes und somit der ersten Achse A (Leitachse) aufgenommen und anschließend das Werkstück W auf der gegenüberliegenden Seite mittels des Backenfutters 9.1 der zweiten Spanneinheit 9 auf der Seite des zweiten Antriebes und somit der zweiten Achse AA gespannt. Dazu wird die zweite Spanneinheit 9 in Richtung zum Werkstück W verfahren.

Der Hauptantrieb der ersten Spanneinheit 9 ist dabei bevorzugt ein Torquemotor, der die erforderliche bearbeitungsrelevante Hauptantriebsleistung und somit die dominanten/bearbeitungsrelevanten Beschleunigungsmomente aufbringt.
Der Antrieb der zweiten Achse ist insbesondere als Servomotor mit Getriebeübersetzung ausgeführt, weist eine geringere Antriebsleistung als der Hauptantrieb auf und dient dazu, dass ein synchrones Mitlaufen auf dieser Seite gewährleistet und Torsionsspannungen verhindert werden. Der Servomotor benötigt daher einen wesentlich geringeren Antriebsmoment als der Torquemotor. Durch diese Ausgestaltung des zweiten Antriebs, der geringer baut als der Hauptantrieb, und der Art der Spannung des Werkstücks ist die Dimensionierung der zweiten Spanneinheit erheblich kleiner als auf der Seite der ersten Spanneinheit, wodurch eine bessere Sicht des Bedieners auf den Bearbeitungsprozess möglich ist.
Weiterhin können durch die Verwendung der kleiner bauenden und eine geringere Antriebsleistung aufweisenden zweiten Spanneinheit die Fertigungskosten reduziert werden

Durch die Verwendung von drei Linearachsen (X, Y, Z) und zwei Rotationsachsen (B, A/AA) lässt sich die Position im Arbeitsraum mit beliebiger Orientierung zwischen Werkzeug und Werkstück einstellen.

Das Werkstück ist dabei um zwei Achsen (B, A/AA) drehbar und wird entlang seiner Längsachse koaxial zu den zueinander fluchtenden Rotationsachsen A/AA gespannt. Durch die beidseitige Abstützung des Werkstücks und den beidseitigen synchronen Antrieb wird die Torsionssteifigkeit des Werkstücks dramatisch erhöht. Die zweite Rotationsachse AA wird parallel zur Rotationsachse A angestellt.
Während die Achse A die dominanten Beschleunigungsmomente aufbringen muss, muss die andere Achse AA nur folgen, so dass keine Reibung bzw. Torsion am Werkstück entsteht. Dafür muss diese Achse AA möglichst kompakt ausgeführt werden, um gute Sicht auf den Arbeitsraum zu ermöglichen, was mit der vorgenannt beschriebenen Ausführung gewährleistet ist.

Durch die Verwendung einer hydraulischen (oder pneumatischen) Spanneinheit für eine Palette auf der einen Seite und ein hydraulisch (oder pneumatisch) betätigtes Backenfutter auf der anderen Seite kann der Spannvorgang des Werkstücks automatisiert werden. Der Werkstückrohling kann entsprechend dann außerhalb der Maschine manuell auf die Palette gespannt werden. Diese kann dann über eine Wechselvorrichtung mitsamt Rohling in den Arbeitsraum gebracht und an der Spanneinheit der Rundachse gespannt werden. Das Werkstück wird dann auf der anderen Seite über das Backenfutter automatisch gespannt. Nach der Bearbeitung kann zunächst das Backenfutter der zweiten Spanneinheit und im Anschluss die erste Spanneinheit gelöst und das fertige Werkstück W samt Palette 10 ausgewechselt werden.

## Patentansprüche

1. Vorrichtung zur Bearbeitung von Werkstücken, insbesondere für eine Werkzeugmaschine (5) mit der Fräsbearbeitungen ausführbar sind,
wobei die Vorrichtung zur Aufnahme eines Werkstückes (W)
- eine erste Spanneinheit (8) mit einem ersten Antrieb und eine zweite Spanneinheit (9) mit einem zweiten Antrieb aufweist, zwischen denen das Werkstück (W) einspannbar und um eine Rotationsachsedrehbar ist, und
- dass zumindest eine der Spanneinheiten (8, 9) entlang der Rotationsachse (A) längsbeweglich ist,
**dadurch gekennzeichnet, dass**
- während der Bearbeitung der erste und der zweite Antrieb das Werkstück (W) antreiben und
- die erste Spanneinheit (8) mit dem ersten Antrieb (erste Achse) und die zweite Spanneinheit (9) mit dem zweiten Antrieb (zweite Achse) ungleich ausgeführt sind, derart,
o dass der erste Antrieb als Hauptantrieb ausgebildet ist und eine bearbeitungsrelevante Hauptantriebsleistung aufbringt und
o dass der zweite Antrieb eine im Vergleich zum ersten Antrieb geringere Antriebsleistung aufweist.

2. Vorrichtung nach Anspruch 1, **dadurch gekennzeichnet, dass** die zweite Spanneinheit (9) kleiner baut als die erste Spanneinheit (8) und dass der zweite Antrieb dem Hauptantrieb synchron derartig folgt, dass keine Reibung und/oder Torsion am Werkstück entsteht.

3. Vorrichtung nach Anspruch 1 oder 2, **dadurch gekennzeichnet, dass** der Hauptantrieb ein Direktantrieb/Torquemotor ist.

4. Vorrichtung nach einem der Ansprüche 1 bis 3, **dadurch gekennzeichnet, dass** der zweite Antrieb als Servomotor mit Getriebeübersetzung ausgeführt ist.

5. Vorrichtung nach einem der Ansprüche 1 bis 4, **dadurch gekennzeichnet, dass** die erste Spanneinheit (8) in Form einer mit dem Hauptantrieb um die Rotationsachse (A) antreibbaren hydraulischen oder pneumatischen Spanneinheit für eine Palette (10) ausgebildet ist.

6. Vorrichtung nach einem der Ansprüche 1 bis 5, **dadurch gekennzeichnet, dass** die zweite Spanneinheit (9) in Form eines mit dem zweiten Antrieb um die Rotationsachse (A) antreibbaren hydraulisch oder pneumatisch betätigten Backenfutters (9.1) ausgebildet ist.

7. Vorrichtung nach einem der Ansprüche 1 bis 6, **dadurch gekennzeichnet,**
- **dass** die hydraulische oder pneumatische Spanneinheit für eine Palette (10) als erste Spanneinheit (8) auf der Seite des Hauptantriebes und somit der ersten Achse (A) (Leitachse) und
- **dass** das Backenfutter (9.1) der zweiten Spanneinheit (9)auf der Seite des zweiten Antriebes und somit der zweiten Achse (AA) des zweiten Antriebes Anwendung findet.

8. Vorrichtung nach einem der Ansprüche 1 bis 7, **dadurch gekennzeichnet, dass** ein Werkstückrohling außerhalb der Vorrichtung auf eine Palette (10) spannbar und über eine Wechselvorrichtung in den Arbeitsraum bringbar und an der ersten Spanneinheit (8) spannbar ist.

9. Vorrichtung nach einem der Ansprüche 1 bis 8, **dadurch gekennzeichnet, dass** das Werkstück (W) auf seiner der Palette (10) gegenüberliegenden Seite über das Backenfutter (9.1) automatisch gespannt wird.

10. Vorrichtung nach einem der Ansprüche 1 bis 9, **dadurch gekennzeichnet, dass** beide Spanneinheiten (8, 9) um eine senkrecht zur ersten Rotationsachse (A) angeordnete zweite Drehachse (B) drehbar sind.
